# EUROPEAN PATENT APPLICATION

(11) **EP 3 279 752 A1**
(43) Date of publication of application: **07.02.2018**
(21) Application number: 16182189.7
(22) Date of filing: 01.08.2016
(51) Int. Cl.: G05B 19/042, G05B 19/418

(54) **VIRTUAL SENSOR SYSTEM AND METHOD FOR GENERATING OUTPUT VALUES**

(71) Applicant: Siemens Aktiengesellschaft, 80333 München (DE)
(72) Inventor: Frank, Reinhard, 81369 München (DE); Zeiger, Florian, 85635 Höhenkirchen-Siegertsbrunn (DE)

(57) **Abstract**

The present invention relates generally to virtual sensor techniques and, more particularly, to multi-tenant sensor ac-cess systems and methods.

In accordance with the invention there is provided a virtual sensor system (200) comprising a virtual sensor module (VS) comprising a processor configured to receive in real time, as input parameter values (260), physical parameter values measured by a sensor and/or virtual sensor values output by another virtual sensor system. Said processor is further configured to generate a first set of output parameter values (271) in accordance with a first output parameter configuration and generate at least one second set of output parameter values (272) in accordance with a second output parameter configuration. The virtual sensor system further comprises a connectivity module (CM) which has a first tenant connector (I_{T1}) configured to set the first output parameter configuration and receive the first set of output parameter values and provide said first set of output parameter values to a first tenant (T1). The connectivity module also has at least one second tenant connector (I_{T2}) configured to set the second output parameter configuration; and receive the second set of output parameter values and provide said second set of output parameter values to a second tenant (T2).

## Description

### TECHNICAL FIELD

The present invention relates generally to virtual sensor techniques and, more particularly, to multi-tenant sensor access systems and methods.

### BACKGROUND

Physical sensors are used in many modern machines, manufacturing plants, and more generally in industrial environments to measure and monitor physical phenomena, such as temperature, speed, and fluid flow constituents. Physical sensors often take direct measurements of the physical phenomena and convert these measurements into measurement data to be further processed by control systems. Physical sensors and associated hardware are often costly which has led to the development of virtual sensor techniques.

US 8,793,004 B2 discloses a virtual sensor network system. which may include a memory that is configured to store a virtual sensor model, an output parameter value default rate of change, and an output parameter value threshold rate of change. The virtual sensor network system may also include a processor that is configured to receive, as input parameter values, physical parameter values of a machine measured from a physical sensor, and generate output parameter values based on the input parameter values and the virtual sensor model. The processor may also be configured to make a comparison between a rate of change of the output parameter values to the output parameter value threshold rate of change, and generate a default output parameter value based on the comparison.

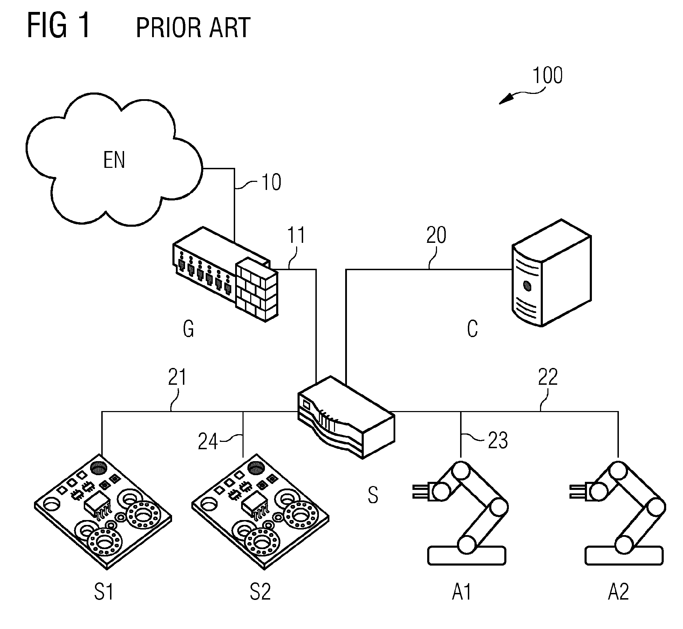

Advanced industrial control networks provide resources to establish communication services between sensors, actuators, controllers, and applications. As illustrated in Fig. 1, industrial networks typically comprise several sensors S1, S2, several actuators A1, A2, a switching component S and a controller C, and are separated from enterprise networks EN via a gateway G which may comprise a firewall and other networking functions such as network address translation. Enabling communication between applications hosted in the enterprise network and sensors, actuators or controllers in a reliable fashion free of interference is quite complex regardless of whether sensor data is accessed directly or using the virtualization mechanisms described in US 8,793,004 B2.

Further problems need solving with the introduction of multi-tenancy to industrial networks. While multi-tenancy is well established in the domain of data centers the mechanisms developed in this domain are often insufficient to address the security, safety, and availability requirements in industrial networks.

Multi-tenancy in the industry domain requires that each tenant (or customer) can make use of its assigned resources without being interfered by another tenant and vice versa. Tenants share common resources such as communication links 10, 11, 20..24, network equipment such as gateways G, routers, firewalls, or switches S as well as access to end devices such as sensors S1, S2 and actuators A1, A2. Each tenant may require an individual view of the resources in the system 100, tailored to the particular needs and tasks of that tenant. In some configurations, at least some physical sensor devices S1, S2 need to be accessed by more than one tenant. Problematically these tenants may require sensor data tailored to specific purposes (e.g., specific sampling rate of sensor data, or special methods for filtering) simultaneously.

It is therefore an object of the present invention to provide an improved virtual sensor system and a method for generating output values that allow multi-tenant independent access to the same sensor's data.

### SUMMARY

In accordance with one aspect of the present invention there is provided a virtual sensor system, comprising a virtual sensor module comprising a processor configured to receive in real time, as input parameter values, physical parameter values measured by a sensor and/or and/or virtual sensor values output by one other virtual sensor system. Said processor is further configured to generate a first set of output parameter values in accordance with a first output parameter configuration and generate at least one second set of output parameter values in accordance with a second output parameter configuration. The virtual sensor system further comprises a connectivity module which has a first tenant connector configured to set the first output parameter configuration and receive the first set of output parameter values and provide said first set of output parameter values to a first tenant. The connectivity module also has at least one second tenant connector configured to set the second output parameter configuration; and receive the second set of output parameter values and provide said second set of output parameter values to a second tenant.

In accordance with another aspect of the present invention there is provided a method for generating output values, comprising determining a first and at least one second output parameter configuration, receiving in real time, as input parameter values, physical parameter values measured by a sensor, generating a first set of output parameter values in accordance with the first output parameter configuration and generating at least one second set of output parameter values in accordance with the second output parameter configuration.

In accordance with yet another aspect of the invention there is provided a control system comprising a virtual sensor system in accordance with the present invention and at least one tenant control application configured to receive the first set of output parameter values, generate a control command based on the first set of output parameter values, and provide the control command to a control component or an actuator.

Embodiments of the present invention advantageously provide access to sensor data readings for different tenants while supporting tenant-specific industrial communication requirements including latency, sampling rates, raw data preprocessing and raw data filtering requirements. Embodiments of the present invention allow tenant access to sensor configuration for supporting tenant-specific configuration parameters. Advantageously, tenant-specific, independent communication domains are provided to avoid interferences in multi-tenant environments while preventing tenants to directly access sensors to facilitate uncompromised sensor performance.

Traditional methods for providing multi-tenant access to sensor data typically allow each tenant to access the sensor directly which not only constitutes a risk to the overall system but also requires sensor arrangements with relatively powerful processors, relatively large memories and advanced networking capabilities that support simultaneous sensor data access of several tenants. By applying the present invention, cheap sensors with low processing, low storage and minimal networking capabilities such as embedded low power devices can be utilized.

### BRIEF DESCRIPTION OF THE DRAWINGS

- Fig. 1: is a diagrammatic illustration of an industrial network coupled to an enterprise network;
- Fig. 2: is a diagrammatic illustration of an exemplary virtual sensor system;
- Fig. 3: is a block diagram of an exemplary output value generating method;
- Fig. 4: is a diagrammatic illustration of an exemplary virtual sensor system wherein multiple tenants access a single sensor's data;
- Fig. 5: is a diagrammatic illustration of an exemplary system wherein multiple tenants access multiple sensors' data; and
- Fig. 6: is a diagrammatic illustration of an exemplary system wherein flow aggregation is utilized.

### DETAILED DESCRIPTION

As explained above, Fig. 1 shows a system 100 with an industrial networks having several traditional sensors S1, S2, several actuators A1, A2, a switching component S and a controller C which is coupled to an enterprise network EN via a gateway G which may comprise a firewall and other networking functions such as network address translation. Several communication links 10, 11, 20..24, each having a limited bandwidth, are provided to facilitate communication amongst said networked components.

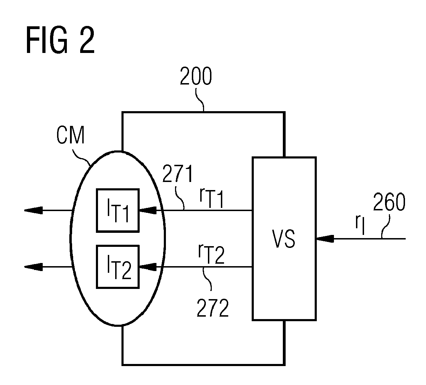

In accordance with principal embodiments of the invention, access to the sensors S1, S2 will be limited to an administrative function of the industrial network. Tenants will not be given direct access to the sensor data and sensor configuration. Instead a virtual sensor system as shown in Fig. 2 is employed to provide raw or processed sensor data to multiple tenants.

In more detail, a virtual instance (virtual sensor VS) is created for each sensor in accordance with the invention that is connected to the tenants' environments. The physical sensor is not accessible to tenants and tenants' access is terminated at each virtual sensor VS. In other words, the virtual sensor VS is the abstraction of the physical sensor - each tenant anticipates the virtual sensor VS as its sensor.

In a preferred virtual sensor system 200 a virtual sensor VS uses a set of configuration parameters which can only be accessed and modified via a dedicated configuration interface which may only accessible by a system administrator and which in particular will not be available to tenants. In some configurations there may be one or more preferred tenants, for example if the administrator is also a tenant. In such configurations such preferred tenant(s) may be given access to the virtual sensor's configuration interface.

Virtual sensor configuration parameters may include name, address, binding to input data stream 260 having a rate r_{I}, binding to physical sensor where applicable (not shown), sampling rate for incoming data stream, sampling rates r_{T1}, r_{T2} for outgoing data streams 271, 272, supported filters (optional, not shown), access rules for tenants, and configurations for binding virtual sensors and the associated output data streams or sets of output parameter values r_{T1}, r_{T2} to communication interfaces of different tenants.

For each tenant there may be provided a configuration interface accessible via a dedicated tenant connector I_{T1}, I_{T2} which forms the sensor-side terminal of the communication channel binding the tenant to the virtual sensor system 200. By means of this configuration interface tenants may set their specific virtual sensor configuration parameters resulting in a tenant-specific virtual sensor configuration. Such tenant-specific virtual sensor configuration only affects the virtual sensor's behavior, i.e. the output data stream 271, 272 for that particular tenant. Parameters may include enabling or disabling raw data filtering, filterspecific parameters, or sensor-specific parameters such as sampling rate or scaling.

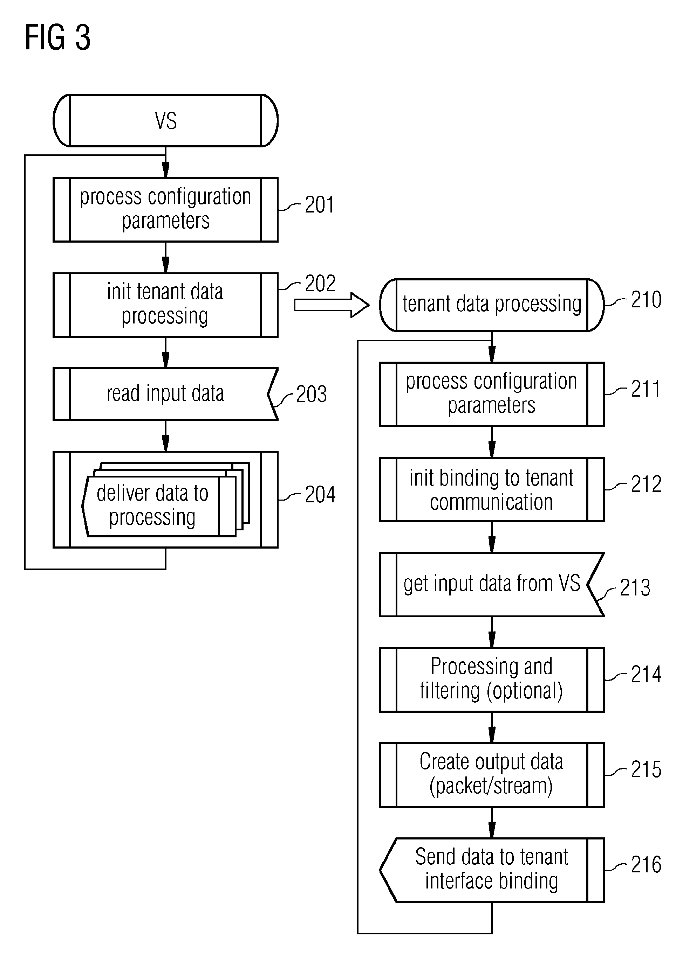

Sensor data processing may be implemented as independent processes 210 per tenant. An exemplary process is shown in Fig. 3. This process 210 is instantiated per registered tenant. Process 210 in a first step 211 processes configuration parameters, followed by an initialization step 212 which binds the process to tenant communication. In repeat execution, steps 211 and 212 may simply check for changes that may have occurred since the last execution of steps 211 and 212 and modify the processing or communication parameters accordingly. If no changes have occurred then steps 211 and 212 create no new output and/or no new commands.

In a data acquisition step 213 an incoming data set is obtained from the virtual sensor. In a preferred embodiment the incoming data set will be the data set 260 as acquired by the physical sensor at rate r_{I}. In other embodiments the incoming data set may be preprocessed, for example by performing a sampling rate adaptation from the actual sampling rate at which measurements are taken at the physical parameter to the sampling rate specified by the tenant as part of an output parameter configuration, or by performing error correction.

In the preferred embodiment, data 260 with input rate r_{I} is received from the sensor directly and in other embodiments from a downstream virtual sensor system. This input data is used to generate the required output data rate for the individual tenants, either synchronously (each input data value corresponds to at least one output data value as part of step 213) or asynchronously (input values are processed by filtering, interpolation, data fusion or other methods in order to create output values as part of an optional step 214). Different well-known strategies such as those known from US 8,793,004 B2 may be utilized to generate output data rates based on raw input data 260.

In an optional step 214 further tenant-specific processing mechanisms as prescribed by a tenant-provided output parameter configuration (or in the absence thereof by a default output parameter configuration) may be applied as defined by the tenant's virtual sensor configuration. In particular, tenant-specific filtering operations may be carried out as part of step 214 to create tenant-specific (filtered) output 271, 272 at rates r_{T1}, r_{T2}, respectively.

In step 215 the process 210 associated with tenant T1 of virtual sensor system 200 connects first tenant output data stream 271 with first tenant environment T1 via the first tenant connector I_{T1} of connectivity module CM. The connectivity module CM comprises one tenant connector for each tenant and ensures the isolated presentation and secure linking of the tenant-specific output of the virtual sensor system to the corresponding tenant environment.

Isolated presentation of the output 271, 272 is achieved by appropriate linking each tenant's data processing module 210 via the corresponding tenant connection interface I_{T1}, I_{T2} to each tenant's environment T1, T2.

Process 210 is started by the virtual sensor module's basic process which comprises a step 201 for processing the physical sensor configuration parameters and applying them to the sensor, a step 202 for creating and initializing the one instance of process 210, step 203 which reads the raw sensor input data 260, and a step 204 which provided either the raw sensor input data or a preprocessed version thereof to all instances of process 210. This basic process may run continuously. If in step 201 it is determined that the sensor configuration parameters have not changed then the method progresses to step 202. Otherwise the new configuration parameters will be processed and applied to the physical sensor.

In embodiments, the basic process and the tenant processes may be realized as native applications, for example as applications on an embedded device or as modules on a network device like a firewall. In other embodiments, the basic process and the tenant processes may be as applications running in virtualized environments such as virtual machines or containers.

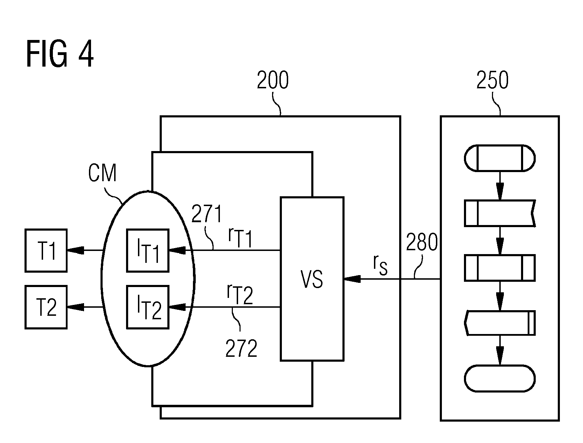

With reference to Figs. 4-6 three exemplary system configurations that utilize the present invention will now be explained in more detail.

Fig. 4 is a diagrammatic illustration of an exemplary virtual sensor system wherein multiple tenants access a single sensor's data. One physical sensor (not shown) is observing a process and serves two tenants T1, T2 with sensor data. The sensor is virtualized as explained before into a virtual sensor system 200. The sensor reads data 280 with sampling rate rₛ. The virtual sensor component VS uses that data and creates a first tenant-specific data stream 271 with a first tenant-specific sampling rate r_{T1} and a second tenant-specific data stream 272 with a second tenant-specific sampling rate r_{T2}. The virtual sensor component VS sends corresponding data values or packets via a first tenant interface I_{T1} to first tenant T1 and via a second tenant interface I_{T2} to second tenant T2.

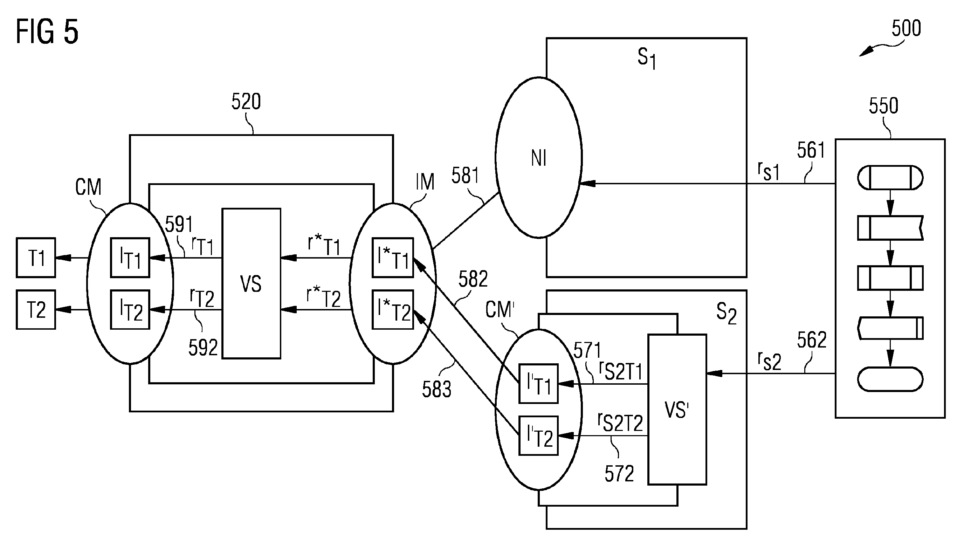

Fig. 5 is a diagrammatic illustration of an exemplary system 500 wherein multiple tenants access multiple sensors' data. In more detail, first tenant T1 observes a process 550 using two sensor systems S₁ and S₂ each comprising at least one physical sensor (not shown), and second tenant T2 observes the process 550 using only one sensor system S₂.

In the exemplary system shown in Fig. 5 the first sensor system S₁ may be a traditional physical sensor that does not employ any sensor virtualization because its data is exclusively accessed by one tenant. In other embodiments a virtual sensor system may be utilized in such cases to add flexibility to the system so that second tenant T2 may also be provided with the first sensor system's data without costly system modification.

First sensor system S₁ acquires data 561 at a sampling rate r_{S1}, which in the exemplary embodiment is propagated onward "as is" via a network interface NI of first sensor system S₁.

In the embodiment shown in Fig. 5 the second sensor system S₂ is a virtual sensor system such as described with reference to Figs. 2 to 4. A virtual sensor VS' receives in real time, as input parameter values, physical parameter values 562 measured by a second sensor (not shown) at a sampling rate r_{S2}. The second sensor system S₂ processes the measurements and creates a first and a second set of intermediate output parameter values 571, 572 at sampling rates r_{S2T1} and r_{S2T2}, respectively. Said intermediate output parameter values 571, 572 are received by the connectivity module CM' of sensor system S2 and propagated onward by first and second tenant connectors I'_{T1} and I'_{T2} of the connectivity module CM', respectively.

It should be noted that in the exemplary configuration shown in Fig. 5 neither the first sensor system S₁ nor the second sensor system S₂ are visible to or accessible by the tenants' applications. Instead a third function or component 520 serves as the representation of both sensor systems S₁, S₂ towards tenants T1, T2.

Component 520 is similar in structure to a virtual sensor system as illustrated with reference to Figs. 2-4 and serves a similar purpose in that it receives data and processes them in accordance with tenants' requirements. Component 520 may therefore be considered as another virtual sensor system which makes available sensor data of multiple sensors. Alternatively it may be considered as an aggregating network function which first aggregates and then makes available sensor data of multiple sensors. It should be noted that the two sensor systems S₁, S₂ and component/function 520 may of course be housed within the same physical entity. Also the functionality of these three components may be implemented in the form of computer-readable instructions which are executed by a single processor.

Component 520 may thus comprise a virtual sensor component VS which receives, via an input module IM comprising first and second input connectors I*_{T1} and I*_{T2}, the data 581, 582, 583 output by the sensor systems S₁, S₂. In order to serve requests from first tenant T1, virtual sensor component VS receives first data 581 from first sensor system S₁ having a sampling rate r_{S1} which in the embodiment of Fig. 5 is equivalent the sensor raw data of the physical sensor in sensor system S₁. Additionally second data 582 is received from second sensor system S₂ having a tenant-specific sampling rate r_{S2T1}. Second data 582 may also be otherwise preprocessed by sensor system S₂ in accordance with a parameter configuration specific to first tenant T1.

Based on the received first and second data 581, 582 the virtual sensor VS creates combined data 591 having a sampling rate r_{T1} and propagates this combined data 591 to first tenant via first tenant interface I_{T1}. The step of combining first and second data 581, 582 into combined data 591 can by any numerical or other signal processing combination of signals or data. In embodiments the second set of data 582 may serve as a plausibility check for the first set of data 581 with the combined data 591 being equal to the first set of data 581 for as long as the plausibility criteria are fulfilled.

In parallel to creating the combined data 591 second tenant T2 is supplied with output data 592 at data rate r_{T2} via first tenant interface I_{T1} which is derived from third input data 583 received at sampling rate r_{S2T2} by function 520 from second sensor system S₂.

In the embodiment of Fig. 5 it is shown that the virtual sensor systems of the present invention may also be operated in a chain. As mentioned earlier virtual sensors further up the chain, i.e. closer to the tenant applications, may be deployed at system elements 520 that are not sensor elements in the strict sense, for example at a network element such as a switch or a controller element of the industrial network or a dedicated network element located in the enterprise network.

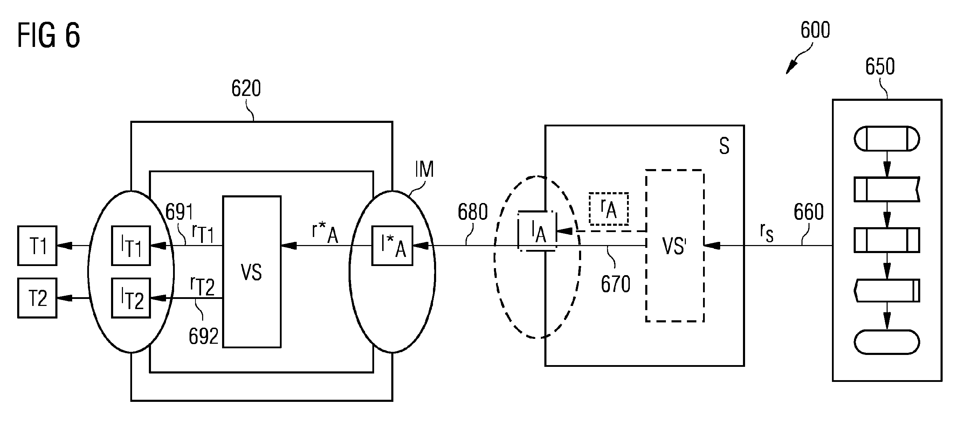

Fig. 6 is a diagrammatic illustration of an exemplary system 600 wherein flow aggregation is utilized. A process 650 is monitored by first and second tenants T1 and T2 using a sensor system S. The physical sensor of sensor system S (not shown) produces raw data 660 at a raw data sampling rate r_{S}. First tenant T1 requires data at a first sampling rate r_{T1} and second tenant T2 requires data at a second sampling rate r_{T2}.

The exemplary system 600 illustrated in Fig. 6 may overcome a situation where the bandwidth of the outbound connection 680 of the sensor system S is insufficient to support the transfer of data at both sampling rates r_{T1} and r_{T2} simultaneously on two separate communications links which creates additional overhead. The minimum required bandwidth for the transfer of data at two sampling rates r_{T1} and r_{T2} simultaneously is at least r_{T1}+r_{T2}. By employing a structure as shown in Fig. 6 the outbound bandwidth of sensor system may be as low as r_{T1}+r_{T2}-min(r_{T1}, r_{T2}) depending on r_{T1}+r_{T2}.

In order to achieve this outbound bandwidth reduction the virtual sensor system S outputs the data stream having the higher sampling rate and additionally outputs only those values from the data stream having the lower sampling rate that are not already part of the data stream having the higher sampling rate. In an ideal case where one target sampling rates is an integer multiple of the other sampling rate the resulting output sampling rate r_{A} output on connection 680 by virtual sensor VS' of sensor system S is equal to the higher sampling rate.

This data stream is then received by a network function 620 which is located in a part of the industrial network or the enterprise network where bandwidth constraints are of no particular concern. Network function 620 processes the data received via input module IM at sampling rate r*_{A} and utilizes its own virtual sensor function VS to create two data streams 691, 692 at the required sampling rates r_{T1} and r_{T2}, respectively, and outputs data streams 691, 692 via tenant connectors I_{T1}, I_{T2} to tenants T1, T2.

More generally, the present invention may also be utilized to facilitate flexible placement and chaining of components and sensor systems inside the network. Depending on requirements like response times, bandwidth, processing power, and memory capabilities of devices it can either be deployed on or very close to the physical sensors or on (for example more powerful) devices located remotely.

It should be noted that in system configurations 500, 600 that employ chaining as illustrated in Figs. 5 and 6 tenants' direct access can be restricted to the top element 520, 620 of the chain, i.e. the element which is closes to the tenants' applications. On the other hand some or all tenants may additionally be granted direct access to any other element downstream from the top element 520, 620.

It should further be noted that the instructions for implementing the processes, methods and/or techniques discussed herein may be provided on computer-readable storage media or memories, such as a cache, buffer, RAM, removable media, hard drive or other computer-readable storage media. Computer-readable storage media include various types of volatile and nonvolatile storage media. The functions, acts or tasks illustrated in the figures or described herein are executed in response to one or more sets of instructions stored in or on computer-readable storage media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing and the like. In one embodiment, the instructions are stored on a removable media device for reading by local or remote systems. In other embodiments, the instructions are stored in a remote location for transfer through a computer network or over telephone lines. In yet other embodiments, the instructions are stored within a given computer, CPU, GPU, or system.

And it should be noted that the terms "set of parameter values", "data stream", "data", "parameter" and variations thereof are used interchangeably herein because whether there is only one parameter, a set of parameters, a data stream (collectively referred to as data) is simply a question of how a time window is chosen for the acquisition and processing of the data or parameter(s), as is well known to those with skills in the art of digital signal processing. Consequently a set of parameters may be empty or may comprise only one parameter value or it may comprise a large number of values.

## Claims

1. Virtual sensor system (200), comprising:
a virtual sensor module (VS) comprising a processor configured to
receive in real time, as input parameter values (260), physical parameter values measured by at least one sensor (S1, S2) and/or virtual sensor values output by one other virtual sensor system;
generate a first set of output parameter values (271) in accordance with a first output parameter configuration; and
generate at least one second set of output parameter values (272) in accordance with a second output parameter configuration;
a connectivity module (CM) comprising
a first tenant connector (I_{T1}) configured to
set the first output parameter configuration; and
receive the first set of output parameter values (271) and provide said first set of output parameter values to a first tenant (T1);
at least one second tenant connector (I_{T2}) configured to
set the second output parameter configuration; and
receive the second set of output parameter values (272) and provide said second set of output parameter values to a second tenant (T2).

2. The virtual sensor system of claim 1, wherein the connectivity module is configured to prevent tenants from directly accessing the input parameter values (260) and/or the at least one sensor and/or the at least one other virtual sensor system.

3. A system comprising:
at least one first virtual sensor system (S1, S2, S) according to any of claims 1 or 2; and
at least one second virtual sensor system (520, 620) according to any of claims 1 or 2,
wherein the at least one second virtual sensor system (520, 620) takes the place of the first and second tenant for the at least one first virtual sensor system (S1, S2, S).

4. A control system comprising:
at least one virtual sensor system (200) according to any of claims 1 or 2;
at least one tenant control application configured to
receive the first set of output parameter values (271);
generate a control command based on the first set of output parameter values (271); and
provide the control command to a control component (C) or an actuator (A1, A2).

5. A method for generating output values, comprising:
determining a first and at least one second output parameter configuration;
receiving in real time, as input parameter values (260), physical parameter values measured by at least one sensor (S1, S2) and/or virtual sensor values output by at least one virtual sensor system;
generating a first set of output parameter values (271) in accordance with the first output parameter configuration; and
generating at least one second set of output parameter values (272) in accordance with the second output parameter configuration.

6. The method of claim 5, wherein the first and the at least one second output parameter configurations comprise a sampling rate.

7. The method of claim 5 or 6, wherein the first and/or the at least one second output parameter configurations comprises a parameter identifying a filter and filter parameters.
